# EUROPEAN PATENT SPECIFICATION

(11) **EP 3 999 551 B1**
(45) Date of publication and mention of the grant of the patent: **22.10.2025**
(21) Application number: 20841375.7
(22) Date of filing: 16.07.2020
(51) Int. Cl.: C08B 30/18, C08B 37/02, C08L 3/04, C08L 5/02, C09K 17/32, C09K 8/035, C09K 8/20

(54) **AMINE-FUNCTIONALIZED SACCHARIDE POLYMERS PREPARED BY HYPOCHLORITE OXIDATION**
DURCH HYPOCHLORITOXIDATION HERGESTELLTE AMINFUNKTIONALISIERTE SACCHARID-POLYMERE
POLYMÈRES DE SACCHARIDE À FONCTION AMINE PRÉPARÉS PAR OXYDATION À L'HYPOCHLORITE

(30) Priority: 17.07.2019 US 201962875122 P
(43) Date of publication of application: 25.05.2022
(73) Proprietor: Integrity Bio-Chemicals, LLC, Cresson, TX 76035 (US)
(72) Inventor: MADDURI, Ashoka V.R., Cresson, Texas 76035 (US); BLACKMON, Matthew B., Cresson, Texas 76035 (US); GARDNER, Christopher P., Cresson, Texas 76035 (US)
(74) Representative: Arnold & Siedsma
(86) International application number: PCT/US2020/042266
(87) International publication number: WO 2021/011736

(56) References cited:
- WO-A1-2020/014442
- US-A1- 2016 272 877
- US-A1- 2016 289 559
- US-A1- 2018 340 120
- US-A1- 2020 017 755
- FLOOR M ET AL: "PREPARATION AND CALCIUM COMPLEXATION OF OXIDIZED POLYSACCHARIDES", STARCH/STARKE, WILEY-VCH VERLAG, WEINHEIM, DE, vol. 41, no. 9, 1 September 1989 (1989-09-01), pages 348 - 354, XP000053560, ISSN: 0038-9056
- IAN CUMPSTEY: "Chemical Modification of Polysaccharides", ISRN ORGANIC CHEMISTRY, vol. 2013, 1 January 2013 (2013-01-01), pages 1 - 27, XP055551098, DOI: 10.1155/2013/417672
- EIKE J H, PALMER A F: "Oxidized mono-, di-, tri-, and polysaccharides as potential hemoglobin cross-linking reagents for the synthesis of high oxygen affinity artificial blood substitutes.", BIOTECHNOLOGY PROGRESS, AMERICAN CHEMICAL SOCIETY, vol. 20, no. 3, 1 May 2004 (2004-05-01), pages 953 - 962, XP002734643, ISSN: 8756-7938, DOI: 10.1021/bp0499754

## Description

### CROSS-REFERENCE TO RELATED APPLICATIONS

### BACKGROUND

Recovery of hydrocarbon resources, such as oil and gas, from subterranean formations containing water-sensitive minerals, such as clays, can be problematic in many instances. The crystalline structure of layered silicate clays can become mechanically unstable in the presence of water and hydraulically swell, sometimes forming a viscous fluid slurry, which may impact fluid flow within a subterranean formation and/or a wellbore penetrating the subterranean formation. Alternately, the mechanical breakdown of clays may produce fines that gradually migrate throughout the subterranean formation and wellbore. Both types of degradation are problematic due to their potential to impact fluid flow performance adversely and/or promote formation damage, thereby leading to decreased fluid permeability. Complete occlusion of fluid flow pathways or collapse of the wellbore walls may occur in some instances of excessive clay swelling or destabilization.

Clay stabilizers are substances that may be used to limit the effect of aqueous fluids on water-sensitive clays. As used herein, the term "clay stabilizer" refers to any substance that aids in stabilizing a clay mineral against interaction with an aqueous fluid, thereby decreasing or eliminating propensity for the clay mineral to swell and/or migrate in the form of fines. Clay stabilizers are typically disposed in a carrier fluid, usually an aqueous carrier fluid, for their interaction with a clay mineral. In many cases, clay stabilizer fluids contain inorganic salts, such as potassium chloride, which may interact with a clay surface and promote ion-exchange and dewatering of the clay structure therewith in order to increase the clay's stability. Potassium-laden clays are much less prone to swelling and fines migration compared to the native (pre-exchanged) sodium form. Consolidating agents that physically bind the clay particles together also may be suitable clay stabilizers in some instances. Suitable consolidating agents may include polymers, resins, and the like. High molecular weight polyacrylamide polymers may be used in this regard. Amine-functionalized polysaccharides have also been used for clay stabilization in some instances, as described in U.S. Patent Application Publication 2016/0289559.

Despite the ready ability of inorganic salts and polymeric consolidating agents to temper the instability of clay minerals, these substances do not represent a completely satisfactory and universal approach to the problem of clay stabilization in the presence of aqueous fluids. Fluids containing high concentrations of inorganic salts can be environmentally unfriendly to the wildlife and flora surrounding a drilling site, and disposal of such fluids may be problematic. In addition, high salt concentrations may impact the proper functioning of fluids commonly introduced into a well bore, such as fracturing fluids and other gelled fluids. Namely, high salt concentrations may lead to improper gelation or an excessive fluid weight, which may result in improper functioning and/or placement of the fluid. Polymeric consolidating agents may be expensive in certain instances, excessively increase fluid viscosity, detrimentally impact one or more other functional components of a treatment activity (e.g., by rendering other functional components inactive or having reduced activity), and some may present their own toxicity issues. Biologically derived polymers may alleviate some of these issues, but access to particular polymer structures of interest may be limited by the specific molecular structure of the biological source material.

Floor M et al.: "Preparation and calcium complexation of oxidized polysaccharides", Starch Starke, Wiley-VCH Verlag, Weinheim, DE, vol. 41, no. 9, 1 September 1989, pages 348 - 354 discloses oxidation of maltodextrins and starch with aqueous alkaline sodium hypochloride.

### DETAILED DESCRIPTION

The present disclosure generally relates to methods for the preparation of functionalized saccharide polymers and, more specifically, functionalized saccharide polymers prepared from selective oxidative opening of trans-vicinal diols in polysaccharides and oligosaccharides. The functionalized saccharide polymers may be effective for promoting clay control, in various non-limiting embodiments.

As discussed above, the interaction of clays with aqueous fluids may be problematic in many instances. Clay swelling and/or fines migration may occur upon interacting water-sensitive clays with aqueous fluids, which may lead to a number of undesirable subterranean outcomes, such as decreased formation permeability and/or surface abrasion within a wellbore. Although clay stabilizers may be utilized to mitigate deleterious interactions between aqueous fluids and water-sensitive clays, currently used clay stabilizers do not provide a completely satisfactory approach to the problem of clay stabilization. Namely, conventional clay stabilizers may present environmental issues, particularly inorganic salts, and some may be more expensive than desirable. Biologically derived materials may not offer a range of desired structural diversity in some cases.

Functionalized saccharide polymers, such as amine-functionalized dextran polymers and other amine-functionalized polysaccharides, may be effective for promoting clay stabilization, as described in U.S. Patent Application Publication 2016/0289559, which is incorporated herein by reference in its entirety. Amine-functionalized oligosaccharides, such as amine-functionalized maltodextrin, may also be effective for promoting clay stabilization, as described in U.S. Patent Application Publication 2020/0017755, which is also incorporated herein by reference in its entirety. Amine-functionalized saccharide polymers provide a considerably different approach to clay stabilization and are much more environmentally friendly than are conventional clay stabilizers, such as inorganic salts and fully synthetic polymers.

The functionalized saccharide polymers described in U.S. Patent Application Publication 2016/0289559 and U.S. Patent Application Publication 2020/0017755 comprise multiple monosaccharide units (monomers) that are linked by glycosidic bonds. In the case of the polysaccharides described in U.S. Patent Application Publication 2016/0289559, many of the polysaccharides are branched, although some are substantially unbranched or not heavily branched. Dextran, for example, is characterized by having predominantly α(1,6) glycosidic bonds between adjacent glucose monosaccharide units, with a limited number of glucose side chains linked to the main polymer backbone via α(1,3) glycosidic bonds. Depending on the type of saccharide polymer and the biological source, the extent and location of the branching may vary considerably in dextran and other polysaccharides. Along the polymer backbone, the free hydroxyl groups not involved in forming glycosidic bonds in the foregoing saccharide polymers are disposed predominantly in a trans relationship to one another, specifically as a plurality of trans-vicinal diols disposed along the monosaccharide units defining the polymer backbone. Cis-vicinal diols, when present, may reside predominantly, at the termini of the polymer backbone or within the side chains, if present. A notable exception is guar, which contains a mannose backbone with cis-vicinal diols.

Certain amine-functionalized polysaccharides described in U.S. Patent Application Publication 2016/0289559 may be synthesized through oxidative opening of at least a portion of the monosaccharide rings using sodium periodate, thereby forming a dialdehyde. Following formation of the dialdehyde, reductive amination may be conducted to introduce one or more amines at the site of oxidative opening. Amine functionalization of the oligosaccharides described in U.S. I Patent Application Publication 2020/0017755 may be carried out similarly. The glycosidic bonds are preserved in the oxidation process, thereby maintaining the backbone length of the parent saccharide polymer.

While oxidative opening of a portion of the monosaccharide units in saccharide polymers may be carried out successfully with sodium periodate, this reagent may display reaction selectivity toward cis-vicinal diols. Many other oxidation reagents are also selective toward cis-vicinal diols. As mentioned above, trans-vicinal diols may predominate along the polymer backbone in the saccharide polymers mentioned above, with cis-vicinal diols tending to be located at the termini of the polymer backbone or upon side chain branches. Thus, although effective for promoting oxidative functionalization, sodium periodate may be somewhat limited in the range of amine-functionalized structures it may produce. Specifically, sodium periodate may tend to open cis-vicinal diols in preference to trans-vicinal diols, which may lead to a regional disposition of amine functionalization following reductive amination. Alternately, sodium periodate may react with trans-vicinal diols within the polymer backbone, but not as completely or effectively as compared to the degree of oxidation attainable had an oxidation reagent more selective for trans-vicinal diols been available. Specifically, sodium periodate may promote some degree of oxidative opening of trans-vicinal diols within a saccharide polymer, but not to the extent possible (*i.e.,* a higher amount of oxidative opening for subsequent functionalization at a higher amine loading) had an oxidation reagent more selective for reaction with trans-vicinal diols been available.

Aqueous sodium hypochlorite (*i.e.,* commercial bleach solutions) and sodium hypochlorite pentahydrate, also in an aqueous solution, may be very effective oxidation reagents for promoting oxidative cleavage vicinal diols in saccharide polymers. The latter oxidation reagent may be particularly effective for promoting oxidative opening of trans-vicinal diols in saccharide polymers, thereby affording access to amine-functionalized saccharide polymers that may otherwise be difficult to obtain using other oxidation reagents. Namely, sodium hypochlorite pentahydrate may promote oxidation and subsequent amine functionalization at sites along the saccharide polymer backbone that are either unreactive with sodium periodate and similar oxidants at least partially selective for oxidation of cis-vicinal diols. In addition or alternatively, sodium hypochlorite pentahydrate may promote a greater extent of oxidation and subsequent amine functionalization along the polymer backbone than may be achievable with other oxidation reagents.

Aqueous sodium hypochlorite and aqueous sodium hypochlorite pentahydrate solutions may be distinguished at least by differences in their pH. Commercial bleach solutions (aqueous sodium hypochlorite) typically have a pH above about 13, whereas aqueous sodium hypochlorite pentahydrate solutions have a pH closer to about 10. Thus, sodium hypochlorite pentahydrate solutions may be advantageous for saccharide polymers having sensitivity toward higher pH values. It is believed that aqueous sodium hypochlorite solutions may display comparable, but not identical, activity toward trans-vicinal diol cleavage if they are pH adjusted into the same range as obtained for sodium hypochlorite pentahydrate solutions. As a further advantage over conventional oxidation reagents used for functionalizing saccharide polymers, sodium hypochlorite pentahydrate is a considerably less expensive oxidation reagent than is sodium periodate.

In addition to the foregoing, there may be complementary differences in reactivity with respect to the extent to which over-oxidation occurs when oxidizing the monosaccharide units in polysaccharide polymers using hypochlorite. Hypochlorite oxidation may produce a limited amount of carboxylic acids when oxidatively opening a vicinal-trans diol. An aldehyde and a carboxylic acid may be produced at the site of oxidative opening in some instances, with the carboxylic acid capable of being retained following reductive amination. Thus, the present disclosure may afford introduction of a limited amount of carboxylic acids along the polymer backbone. Moreover, since sites of oxidative opening bearing one aldehyde group and one carboxylic acid group may undergo only monofunctionlization when reacted with an amine during reductive amination, carboxylic acid introduction may afford a route for fixing the amine stoichiometry at the site of oxidative opening.

In view of the above, sodium hypochlorite pentahydrate may afford different amine-functionalized saccharide polymers than are accessible with sodium periodate and similar oxidation reagents. Such amine-functionalized saccharide polymers may exhibit different properties, particularly with respect to clay stabilization, than are accessible with sodium periodate. Different amounts and/or locations of amine functionalization may be produced in the disclosure herein. Moreover, the potential formation of salt-forming carboxylic acid groups along the saccharide polymer backbone may promote additional and complementary clay stabilization effects compared to those available with amine-functionalized saccharide polymers formed with other oxidation reagents.

Accordingly, the present disclosure provides amine-functionalized saccharide polymers comprising one or more monosaccharide units linked by glycosidic bonds and comprising a trans-vicinal diol, in which the trans-vicinal diol of at least a portion of the one or more monosaccharide units are oxidatively opened and functionalized with at least one amine group at a site of oxidative opening.

Suitable saccharide polymers may comprise a polysaccharide in some embodiments of the present disclosure. Polysaccharides and amine-functionalized polysaccharides suitable for use in the various embodiments of the present disclosure are environmentally safe, substantially nonhazardous to work with, and generally biocompatible. Polysaccharides such as dextran, levan and guar, for example, as well as their functionalized forms, may also be biodegradable and pose little to no threat to the environment, even when used in high concentrations. In addition, these materials may be sourced or produced at relatively low cost.

Suitable polysaccharides that may undergo functionalization according to the disclosure herein include, for example, levan, dextran, guar (guar gum), scleroglucan, welan, pullulan, xanthan (xanthan gum), schizophyllan, cellulose, and any combination thereof. Dextran, levan and guar may be particularly desirable polysaccharides for use in forming the amine-functionalized saccharide polymers disclosed herein. Derivative forms of the foregoing polysaccharides may be used as well, and such derivative forms may undergo the types of further functionalization described hereinafter. Guar derivatives suitable for use in the various embodiments of the present disclosure may include, for example, carboxyalkyl or hydroxyalkyl derivatives of guar, such as, for example, carboxymethyl guar, carboxymethylhydroxyethyl guar, hydroxyethyl guar, carboxymethylhydroxypropyl guar, ethyl carboxymethyl guar, and hydroxypropylmethyl guar. Suitable dextran and levan derivatives may similarly include, for example, carboxyalkyl or hydroxyalkyl derivatives of dextran or levan, such as, for example, carboxymethyl dextran (levan), carboxymethylhydroxyethyl dextran (levan), hydroxyethyl dextran (levan), carboxymethylhydroxypropyl dextran (levan), ethyl carboxymethyl dextran (levan), and hydroxypropylmethyl dextran (levan).

Polysaccharides suitable for use in the embodiments of the present disclosure may encompass a wide range of molecular weights. In illustrative embodiments, the molecular weight of suitable polysaccharides may range between about 1 million and about 50 million Daltons. In more specific embodiments, the polysaccharide molecular weight, particularly for dextrans and levans, may range between about 1 million and about 5 million Daltons, or between about 3 million and about 10 million Daltons, or between 5 million and about 10 million Daltons, or between 10 million and about 20 million Daltons, or between 20 million and about 30 million Daltons, or between 30 million and about 40 million Daltons, or between 40 million and about 50 million Daltons.

In addition to polysaccharides, saccharide polymers suitable for use in the disclosure herein may comprise an oligosaccharide having 3 to about 20 monosaccharide units, or 3 to about 10 monosaccharide units. Oligosaccharides bearing trans-vicinal diols along the polymer backbone may afford similar advantages to those realizable with larger saccharide polymers (polysaccharides). Maltodextrin may be a particularly advantageous oligosaccharide for use in forming amine-functionalized saccharide polymers of the present disclosure, particularly those suitable for promoting clay stabilization. Suitable maltodextrins are available in a range of oligomer sizes (*e.g.,* 3-20 glucose monomers), which may allow some tailoring of the clay stabilization properties to be realized through choice of the dextrin chain length that undergoes amine functionalization according to the present disclosure. Additional tailoring, including tailoring to more effectively stabilize certain types of clay, may be realized through one's choice of the amine used to promote functionalization and the extent of oxidation that takes place.

Maltodextrins suitable for forming an amine-functionalized saccharide polymer may be obtained from hydrolysis or pyrolysis of starch, specifically the amylose component of starch, according to non-limiting embodiments. In addition, suitable maltodextrins may exhibit dextrose equivalent values ranging from 3 to about 20. In more specific embodiments, dextrose equivalent values of the maltodextrins may range from about 4.5 to about 7.0, or from about 7.0 to about 10.0, or from about 9.0 to about 12.0.

According to the present disclosure, amine-functionalized saccharide polymers may be formed through oxidation of a trans-vicinal diol upon the monosaccharide units of a parent saccharide polymer to form an acyclic structure comprising at least one aldehyde. Oxidative opening may produce a dialdehyde. The at least one aldehyde may then be converted into a secondary or tertiary amine group through reductive amination, as shown in Scheme 1 below. Not all of the sites of oxidative opening necessarily undergo amine functionalization in the disclosure herein. On the whole, about 10 percent or more of the monosaccharide units (counting both non-oxidized and oxidatively opened monosaccharide units) in the polysaccharide or about 20 percent or more of the monosaccharide units may be coupled to an amine group in the amine-functionalized polymers disclosed herein. As such, the amine-functionalized saccharide polymers of the present disclosure may contain zero to two amine groups at each site of oxidative opening. Any aldehyde groups remaining unfunctionalized following imine formation may be converted to a primary alcohol upon reducing the imine moieties (imine moieties not expressly shown in Scheme 1). Thus, each site of oxidative opening may comprise zero to two primary alcohols, depending on the extent to which an imine intermediate formed. It is to be appreciated that both the monosaccharide ring configuration and the location of oxidative opening depicted in Scheme 1 are illustrative and non-limiting. The R group in Scheme 1 is a hydrocarbyl group, which may be substituted or unsubstituted, linear or branched, and cyclic, acyclic, or aromatic.

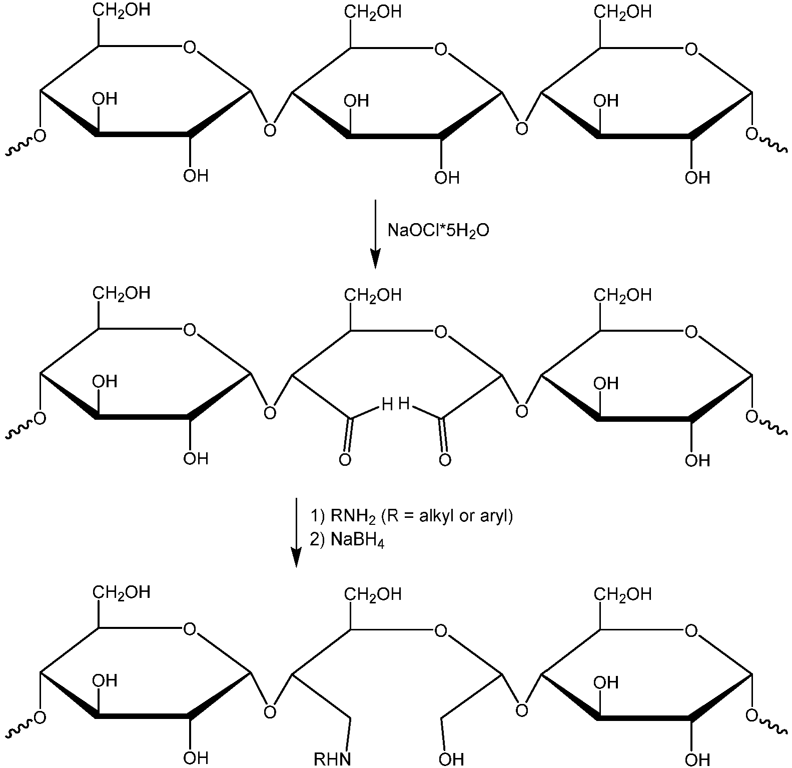

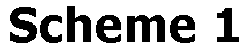

The oxidative opening of the trans-vicinal diol, shown in Scheme 1 above, may take place in an aqueous solvent or a water-immiscible organic solvent. Suitable aqueous solvents may include water or combinations of water with a water-miscible organic solvent such as acetone, tetrahydrofuran, ethylene glycol, or glyme. Suitable water-immiscible organic solvents may include, for example, methylene chloride, toluene, benzene, or the like. When a water-immiscible organic solvent is used, the oxidation reaction may be run under biphasic conditions when combined with a sodium hypochlorite pentahydrate solution. In addition, when using a water-immiscible organic solvent, a phase transfer catalyst, such as a tetraalkylammonium salt, may be employed. Tetrabutylammonium hydrogen sulfate may be a particularly suitable phase transfer catalyst.

The oxidation reaction with sodium hypochlorite pentahydrate may be conducted at a temperature ranging from about 0°C to about 50⁰C. Under typical conditions, the oxidation reaction may be conducted at room temperature (about 25°C).

As mentioned above, over oxidation may occur in some instances when oxidatively opening a monosaccharide unit with sodium hypochlorite pentahydrate. Over oxidation may form a carboxylic acid upon at least one of the ring-opened carbon atoms. The aldehyde formed during oxidative opening may similarly afford an imine intermediate in the presence of the carboxylic acid following exposure to a suitable amine. Instead of being reduced to a primary alcohol following reduction, the carboxylic acid may persist following reduction to form a secondary or tertiary amine, as shown in Scheme 2 below, especially when using NaBH₄ as the reducing agent. Any aldehyde groups not undergoing imine formation may leave a primary alcohol in combination with the carboxylic acid at the site of oxidative opening.

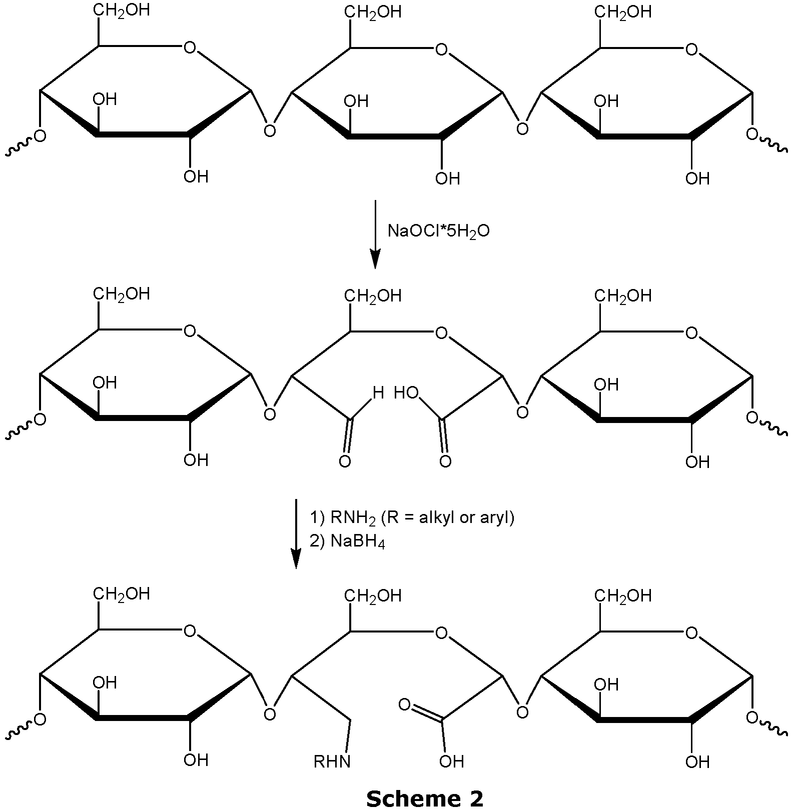

In the present disclosure, any primary or secondary amine may be reacted with the partially oxidized saccharide polymer to afford an imine intermediate, subsequently leading to formation of a secondary or tertiary amine at the site of oxidative opening following reduction. Any of monoamines, diamines, triamines, tetraamines, or even higher polyamines may be bonded to the site of oxidative opening, according to various embodiments. Suitable amines for undergoing a reaction with the at least one aldehyde at the site of oxidative opening may be primary amines or secondary amines. Primary amines lead to the formation of a secondary amine following reductive amination, and secondary amines lead to the formation of a tertiary amine. Suitable amines may otherwise exhibit a variety of structures, and may be selected from entities including primary monoamines, secondary monoamines, diamines, triamines and other polyamines, amino alcohols, and the like. Particularly suitable amines may include, but are not limited to, methylamine, dimethylamine, methylethylamine, ethylamine, diethylemaine, propylamine, butylamine, hexylamine, octylamine, ethylenediamine, propylene diamine, diethylenetriamine, triethylenetetraamine, ethanolamine, and diethanolamine. When more than one amine group is present in the amine, such as in a diamine, a first amine group of the diamine may be directly covalently bound to a carbon atom at the site of oxidative opening, and a second amine group of the diamine may be indirectly bonded (tethered) to the site of oxidative opening.

The amine-functionalized saccharide polymers of the present disclosure may be coated onto a particulate material in some embodiments of the present disclosure. Suitable particulate materials may include a clay material, including vermiculite, montmorillonite or bentonite, for example. Other suitable particulate materials may comprise wood products, including shavings, sawdust, bark, chips and the like, one or more of which may be compressed together in a pellet in some applications. Processed wood particulate materials such as charcoal particulates, for example, may also be suitably used in conjunction with the amine-functionalized saccharide polymers disclosed herein.

The amine-functionalized saccharide polymers disclosed herein may be further formulated with a suitable liquid carrier, such as water or a similar aqueous carrier fluid. The amine-functionalized saccharide polymers may have a concentration in the aqueous carrier fluid ranging from about 1 wt. % to about 25 wt. %, or from about 5 wt. % to about 20 wt. %, or from about 5 wt. % to about 15 wt. %, or from about 5 wt. % to about 10 wt. %. The aqueous carrier fluid may be derived from any source including, for example, fresh water, salt water, sea water, ground water, flowback water, acidified water, aqueous salt solutions, or the like.

In some embodiments, the amine-functionalized saccharide polymers of the present disclosure may be formulated as a subterranean treatment fluid. Treatment fluids may be used in a variety of subterranean treatment operations to facilitate or promote a particular action within the subterranean formation. As used herein, the terms "treat," "treatment," "treating," and grammatical equivalents thereof refer to any subterranean operation that uses a fluid in conjunction with achieving a desired function and/or for a desired purpose. Unless otherwise specified, use of these terms does not imply any particular action by the treatment fluid or a component thereof. Illustrative treatment operations that may be facilitated through use of the amine-functionalized saccharide polymers of the present disclosure include, without limitation, drilling operations, stimulation operations, production operations, remediation operations, sand control operations, and the like, which may include, for example, fracturing operations, gravel packing operations, acidizing operations, descaling operations, consolidation operations, workover operations, cleanup operations, and the like. Alternately, the amine-functionalized saccharide polymers of the present disclosure may be used in conjunction with subterranean operations such as, for example, excavation or mining. In particular, the amine-functionalized saccharide polymers may provide clay stabilization effects during one or more of the foregoing subterranean treatment operations.

As used herein, the term "drilling operation" refers to the process of forming a wellbore in a subterranean formation. As used herein, the term "drilling fluid" refers to a fluid used in drilling a wellbore.

As used herein, the term "stimulation operation" refers to an activity conducted within a wellbore to increase production therefrom. As used herein, the term "stimulation fluid" refers to a fluid used downhole during a stimulation activity to increase production of a resource from the subterranean formation. In particular instances, stimulation fluids may include a fracturing fluid or an acidizing fluid.

As used herein, the terms "clean-up operation" or "damage control operation" refer to any operation for removing extraneous material from a wellbore to increase production. As used herein, the terms "clean-up fluid" or "damage control fluid" refer to a fluid used for removing an unwanted material from a wellbore that otherwise blocks flow of a desired fluid therethrough. In one example, a clean-up fluid can be an acidified fluid for removing material formed by one or more perforation treatments. In another example, a clean-up fluid can be used to remove a filter cake upon the wellbore walls.

As used herein, the term "fracturing operation" refers to a high pressure operation that creates or extends a plurality of flow channels within a subterranean formation. As used herein, the term "fracturing fluid" refers to a viscosified fluid used in conjunction with a fracturing operation.

As used herein, the term "remediation operation" refers to any operation designed to maintain, increase, or restore a specific rate of production from a wellbore, which may include stimulation operations or clean-up operations. As used herein, the term "remediation fluid" refers to any fluid used in conjunction with a remediation operation.

As used herein, the term "acidizing operation" refers to any operation designed to remove an acid-soluble material from a wellbore, particularly an acid-soluble material that comprises at least a portion of the subterranean formation. As used herein, the term "acidizing fluid" refers to a fluid used during an acidizing operation.

As used herein, the term "spotting fluid" refers to a fluid designed for localized treatment of a subterranean formation. In one example, a spotting fluid can include a lost circulation material for treatment of a specific section of the wellbore, such as to seal off fractures in the wellbore and prevent sag. In another example, a spotting fluid can include a water control material or material designed to free a stuck piece of drilling or extraction equipment.

As used herein, the term "completion fluid" refers to a fluid used during the completion phase of a wellbore, including cementing compositions and cementing fluids.

As used herein, the term "cementing fluid" refers to a fluid used during cementing operations within a wellbore penetrating a subterranean formation.

The amine-functionalized saccharide polymers of the present disclosure may be present in any of the treatment fluids discussed above. The amine-functionalized saccharide polymers may promote clay stabilization effects when disposed in any of the treatment fluids.

Treatment fluids of the present disclosure may feature a concentration of the amine-functionalized saccharide polymer ranging from about 0.1 gallons per thousand gallons (gpt) to about 10 gpt, or from about 0.5 gpt to about 5 gpt, or from about 1 gpt to about 3 gpt. These concentrations correspond to volume/volume percentages ranging from about 0.01% to about 1%, or from about 0.05% to about 0.5%, or from 0.1% to about 0.3%. The chosen concentration may vary depending upon the particular requirements for a given treatment operation and/or the specific subterranean conditions that are encountered downhole.

Treatment fluids containing the amine-functionalized saccharide polymers may optionally further comprise any number of additives, particularly those that are commonly used in the oilfield services industry. Illustrative additives that may be present in combination with the amine-functionalized saccharide polymers of the present disclosure include, for example, surfactants, viscosifiers, gelling agents, gel stabilizers, anti-oxidants, polymer degradation prevention additives, relative permeability modifiers, scale inhibitors, corrosion inhibitors, chelating agents, foaming agents, defoaming agents, antifoaming agents, emulsifying agents, de-emulsifying agents, iron control agents, proppants or other particulates, particulate diverters, salts, acids, fluid loss control additives, gas, catalysts, other clay control agents, dispersants, flocculants, scavengers (e.g., H₂S scavengers, CO₂ scavengers or O₂ scavengers), lubricants, breakers, friction reducers, bridging agents, weighting agents, solubilizers, pH control agents (e.g., buffers), hydrate inhibitors, consolidating agents, bactericides, catalysts, the like, and any combination thereof. Suitable examples of these additives will be familiar to one having ordinary skill in the art.

As referenced above, the amine-functionalized saccharide polymers of the present disclosure may be used in various subterranean treatment operations to promote clay control or clay stabilization. Promoting clay control or clay stabilization may include one or more of limiting clay swelling or migration of clay fines compared to that observed when water or a similarly unmodified aqueous fluid interacts with a clay mineral. In more particular embodiments, clay stabilization methods of the present disclosure may comprise: providing a clay stabilizing composition comprising an amine-functionalized saccharide polymer of the present disclosure; introducing the clay stabilizing composition into a subterranean formation bearing a clay-containing mineral; and interacting the amine-functionalized saccharide polymer with the clay-containing mineral to promote stabilization thereof. The amine-functionalized saccharide polymers may promote clay stabilization during any of the subterranean treatment operations listed above.

The amine-functionalized saccharide polymer may be disposed in an aqueous carrier fluid when introduced into the subterranean formation. Suitable aqueous carrier fluids are discussed in more detail above. The aqueous carrier fluid may be introduced into the subterranean formation at matrix flow rates or at a flow rate such that the fracture gradient pressure of the subterranean formation is exceeded.

The amine-functionalized saccharide polymers of the present disclosure have applicability toward stabilizing a wide range of clays, which may be present in various types of subterranean formations. The subterranean formations may contain a clay layer or include a clay-containing mineral. In more specific embodiments, the subterranean formation undergoing clay stabilization according to the present disclosure may be a shale formation. The amine-functionalized saccharide polymers may exhibit a range of clay stabilization effects, depending upon the nature of shale formation undergoing treatment and the type of clay(s) present therein.

Types of clay that may be stabilized with the amine-functionalized saccharide polymers of the present disclosure include both swelling and non-swelling clays. Specific examples of clays that may be stabilized with the amine-functionalized saccharide polymers of the present disclosure include, for example, illite, smectite, mixed illite/smectite, kaolinite, nacrite, dickite, halloysite, chlorite, chamosite, muscovite, biotite, hydrobiotite, talc, glauconite, sepiolite, montmorillonite, nontronite, hectorite, sauconite, saponite, beidellite, nactrite, endellite, greenosite, palygorskite, vermiculite, and/or attapulgite.

Clay stabilization may be characterized in terms of the capillary suction time observed for a given shale or clay mineral. A decrease in capillary suction time following treatment with the amine-functionalized saccharide polymers may be characteristic of clay stabilization. In some specific examples, the clay stabilizing compositions may decrease capillary suction times by about 10% to about 55% relative to the capillary suction time observed for a given shale or clay mineral that has been contacted with an unmodified aqueous fluid lacking a clay stabilizer.

Clay stabilization may also be characterized in terms of the amount of fines produced for a given shale or clay mineral when contacting an aqueous fluid. Effective clay stabilization is characterized by a decreased amount of fines produced for a given shale or clay mineral relative to that produced when the shale or clay mineral has contacted an unmodified aqueous fluid.

Introducing the clay stabilizing composition into the subterranean formation may include contacting or placing the amine-functionalized saccharide polymer within or upon at least one fracture, an area surrounding a fracture, an area designated for fracturing, a flow pathway, an area surrounding a flow pathway, a wellbore surface, and/or a near wellbore surface. Contacting or placing the clay stabilizing composition may involve suitable fluid diversion techniques in some embodiments.

The clay stabilizing compositions may be incorporated in a primary treatment fluid introduced into a subterranean formation. In other embodiments, the clay stabilizing compositions may be incorporated within a fluid pill introduced before a primary treatment fluid or between two primary treatment fluids. In some or other embodiments, introducing the clay stabilizing compositions into the subterranean formation may take place during drilling (*i.e.,* in a drilling fluid) or during completion (*e.g.,* in a cementing fluid).

The clay stabilizing compositions may be introduced into the subterranean formation in conjunction with a hydraulic fracturing operation. The fracturing operation may create or extend at least one fracture or flow pathway within the subterranean formation. Introducing or placing the clay stabilizing compositions in the subterranean formation and the hydraulic fracturing operation may occur at any time with respect to one another. In some embodiments, the clay stabilizing compositions may be present within the fracturing fluid, such that clay stabilization occurs concurrently with or after fracturing. In other embodiments, the clay stabilizing compositions may be present in a pad fluid introduced into the subterranean formation before the primary fracturing fluid. The primary fracturing fluid may contain a proppant for maintaining the fractures open, whereas the pad fluid generally does not contain proppant.

The clay stabilizing compositions may be present in an acidizing fluid. Such acidizing fluids may include mineral acids or organic acids. Mineral acids may include acids such as hydrochloric acid, hydrobromic acid, or hydrofluoric acid, for example. Organic acids may include, for example, formic acid, acetic acid, trifluoroacetic acid, methanesulfonic acid, or trifluoromethane sulfonic acid. Sufficient amounts of the chosen acid may be present in the acidizing fluid to promote dissolution of an acid-soluble material in a subterranean formation or wellbore.

Disclosed herein are:
A. Compositions comprising an amine-functionalized saccharide polymer. The compositions comprise: an amine-functionalized saccharide polymer comprising one or more monosaccharide units linked by glycosidic bonds and comprising a trans-vicinal diol, the trans-vicinal diol of at least a portion of the one or more monosaccharide units being oxidatively opened and functionalized with at least one amine group at a site of oxidative opening.
A1: Compositions comprising an amine-functionalized saccharide polymer prepared by a process comprising: exposing a saccharide polymer comprising one or more monosaccharide units linked by glycosidic bonds and comprising a trans-vicinal diol to an oxidation reagent comprising sodium hypochlorite pentahydrate; reacting the trans-vicinal diol with the oxidation reagent to form a site of oxidative opening bearing at least one aldehyde; exposing the at least one aldehyde to an amine to form an imine intermediate at the site of oxidative opening; and reducing the imine intermediate into a secondary or tertiary amine at the site of oxidative opening to form an amine-functionalized saccharide polymer.
B. Methods for oxidizing a saccharide polymer. The methods comprise: exposing a saccharide polymer comprising one or more monosaccharide units linked by glycosidic bonds and comprising a trans-vicinal diol to an oxidation reagent comprising sodium hypochlorite pentahydrate; reacting the trans-vicinal diol with the oxidation reagent to form a site of oxidative opening bearing at least one aldehyde; exposing the at least one aldehyde to an amine to form an imine intermediate at the site of oxidative opening; and reducing the imine intermediate into a secondary or tertiary amine at the site of oxidative opening to form an amine-functionalized saccharide polymer.
C. Methods for treating a subterranean formation with an amine-functionalized saccharide polymer. The methods comprise: introducing a composition comprising an amine-functionalized saccharide polymer into a subterranean formation bearing a clay-containing mineral; and interacting the amine-functionalized saccharide polymer with the clay-containing mineral to promote stabilization thereof.
A-C may have one or more of the following additional elements in any combination.
Element 1: wherein the amine-functionalized saccharide polymer comprises at least one polysaccharide selected from the group consisting of a dextran, a levan, a guar, and any combination thereof.
Element 2: wherein the amine-functionalized saccharide polymer comprises an oligosaccharide having 3 to about 20 monosaccharide units.
Element 3: wherein the oligosaccharide comprises maltodextrin.
Element 4: wherein the composition further comprises an aqueous carrier fluid.
Element 5: wherein the amine-functionalized saccharide polymer bears a secondary amine or a tertiary amine that is directly covalently bound to one or more sites of oxidative opening.
Element 6: wherein the amine-functionalized saccharide polymer bears a primary alcohol and the secondary amine or the tertiary amine at the one or more sites of oxidative opening, or wherein the amine-functionalized saccharide polymer bears a primary alcohol and the secondary amine or the tertiary amine at the site of oxidative opening.
Element 7: wherein the amine-functionalized saccharide polymer bears a carboxylic acid and the secondary amine or the tertiary amine at the one or more sites of oxidative opening, or wherein the amine-functionalized saccharide polymer bears a carboxylic acid and the secondary amine or the tertiary amine at the site of oxidative opening.
Element 8: wherein the amine-functionalized saccharide polymer comprises one or more sites of oxidative opening that are not amine-functionalized.
Element 8A: wherein the amine-functionalized saccharide polymer bears two secondary or tertiary amines at one or more sites of oxidative opening.
Element 9: wherein at least a majority of the sites of oxidative opening are located upon backbone monosaccharide units linked by the glycosidic bonds.
Element 10: wherein the subterranean formation comprises a shale formation.

By way of non-limiting example, exemplary combinations applicable to A-C include: 1 and 4; 1 and 5; 1 and 6; 1 and 7; 1 and 8; 1 and 8A; 1 and 9; 1, 4 and any combination of 5-8 or 8A; 1 and any combination of 5-8 or 8A; 4 and 5; 4 and 6; 4 and 7; 4 and 8; 4 and 8A; 4 and 9; 5 and 6; 5 and 7; 5 and 8; 5 and 8A; 5 and 9; 6 and 7; 6 and 8; 6 and 8A; 6 and 9; 7 and 8; 7 and 8A; 7 and 9; 8 and 9; 8A and 9; 5-7; 5-8 or 8A; 5-9; 6-8 or 8A; 6-9; 7 and 8; 7 and 8A; 2 and 4; 2-4; 2 and 5; 2 and 6; 2 and 7; 2 and 8; 2 and 8A; 2 and 9; 2, 4 and any combination of 5-8 or 8A; 2 and any combination of 5-8 or 8A; 2, 3 and any combination of 5-8 or 8A; 1 and 2 and 4; 1 and 2 and 3; 1 and 2 and 4; 1 and 2, and 3 and 4; 1 and 2 and 5; 1 and 2 and 6; 1 and 2 and 7; 1 and 2 and 8; 1 and 2 and 8A; 1 and 2 and 9; 1 and 2, and 4 and any combination of 5-8 or 8A; and 1 and 2 and any combination of 5-8 or 8A.

Unless otherwise indicated, all numbers expressing quantities and the like in the present specification and associated claims are to be understood as being modified in all instances by the term "about." Accordingly, unless indicated to the contrary, the numerical parameters set forth in the following specification and attached claims are approximations that may vary depending upon the desired properties sought to be obtained by the embodiments of the present invention. At the very least, and not as an attempt to limit the application of the doctrine of equivalents to the scope of the claim, each numerical parameter should at least be construed in light of the number of reported significant digits and by applying ordinary rounding techniques.

One or more illustrative embodiments incorporating various features are presented herein. Not all features of a physical implementation are described or shown in this application for the sake of clarity. It is understood that in the development of a physical embodiment incorporating the embodiments of the present invention, numerous implementation-specific decisions must be made to achieve the developer's goals, such as compliance with system-related, business-related, government-related and other constraints, which vary by implementation and from time to time. While a developer's efforts might be time-consuming, such efforts would be, nevertheless, a routine undertaking for those of ordinary skill in the art and having benefit of this disclosure.

While various systems, tools and methods are described herein in terms of "comprising" various components or steps, the systems, tools and methods can also "consist essentially of" or "consist of" the various components and steps.

As used herein, the phrase "at least one of" preceding a series of items, with the terms "and" or "or" to separate any of the items, modifies the list as a whole, rather than each member of the list (i.e., each item). The phrase "at least one of" allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

Therefore, the disclosed systems, tools and methods are well adapted to attain the ends and advantages mentioned as well as those that are inherent therein. The particular embodiments disclosed above are illustrative only, as the teachings of the present disclosure may be modified and practiced in different but equivalent manners apparent to those skilled in the art having the benefit of the teachings herein. The systems, tools and methods illustratively disclosed herein may suitably be practiced in the absence of any element that is not specifically disclosed herein and/or any optional element disclosed herein. While systems, tools and methods are described in terms of "comprising," "containing," or "including" various components or steps, the systems, tools and methods can also "consist essentially of" or "consist of" the various components and steps. All numbers and ranges disclosed above may vary by some amount. Whenever a numerical range with a lower limit and an upper limit is disclosed, any number and any included range falling within the range is specifically disclosed. In particular, every range of values (of the form, "from about a to about b," or, equivalently, "from approximately a to b," or, equivalently, "from approximately a-b") disclosed herein is to be understood to set forth every number and range encompassed within the broader range of values. Also, the terms in the claims have their plain, ordinary meaning unless otherwise explicitly and clearly defined by the patentee. Moreover, the indefinite articles "a" or "an," as used in the claims, are defined herein to mean one or more than one of the elements that it introduces.

## Claims

1. A method comprising:
exposing a saccharide polymer comprising one or more monosaccharide units linked by glycosidic bonds and comprising a trans-vicinal diol to an oxidation reagent comprising sodium hypochlorite pentahydrate;
reacting the trans-vicinal diol with the oxidation reagent to form a site of oxidative opening bearing at least one aldehyde;
exposing the at least one aldehyde to an amine to form an imine intermediate at the site of oxidative opening; and
reducing the imine intermediate into a secondary or tertiary amine at the site of oxidative opening to form an amine-functionalized saccharide polymer.

2. The method of claim 1, wherein the saccharide polymer comprises at least one polysaccharide selected from the group consisting of a dextran, a levan, a guar, and any combination thereof.

3. The method of claim 1, wherein the saccharide polymer comprises an oligosaccharide having 3 to about 20 monosaccharide units, preferably wherein the oligosaccharide comprises a maltodextrin.

4. The method of claim 1, wherein the secondary amine or the tertiary amine is directly covalently bound to the site of oxidative opening, preferably wherein the amine-functionalized saccharide polymer bears a primary alcohol and the secondary amine or the tertiary amine at the site of oxidative opening or wherein the amine-functionalized saccharide polymer bears a carboxylic acid and the secondary amine or the tertiary amine at the site of oxidative opening or wherein the amine-functionalized saccharide polymer bears two secondary or tertiary amines at the site of oxidative opening.

5. The method of claim 1, wherein the amine-functionalized saccharide polymer comprises one or more sites of oxidative opening that are not amine-functionalized.

## Patentansprüche

1. Verfahren, umfassend:
Aussetzen eines Saccharidpolymers, umfassend eine oder mehrere Monosaccharideinheiten, die durch glykosidische Bindungen verknüpft sind und umfassend ein trans-vicinales Diol, gegenüber einem Oxidationsreagenz, umfassend Natriumhypochloritpentahydrat;
Umsetzen des trans-vicinalen Diols mit dem Oxidationsreagenz, um eine Stelle einer oxidativen Öffnung auszubilden, die mindestens einen Aldehyd trägt;
Aussetzen des mindestens einen Aldehyds gegenüber einem Amin, um an der Stelle der oxidativen Öffnung ein Imin-Zwischenprodukt auszubilden; und
Reduzieren des Imin-Zwischenprodukts zu einem sekundären oder tertiären Amin an der Stelle der oxidativen Öffnung, um ein aminfunktionalisiertes Saccharidpolymer auszubilden.

2. Verfahren nach Anspruch 1, wobei das Saccharidpolymer mindestens ein Polysaccharid umfasst, das aus der Gruppe ausgewählt ist, bestehend aus einem Dextran, einem Levan, einem Guar und einer beliebigen Kombination davon.

3. Verfahren nach Anspruch 1, wobei das Saccharidpolymer ein Oligosaccharid umfasst, das 3 bis etwa 20 Monosaccharideinheiten aufweist, vorzugsweise wobei das Oligosaccharid ein Maltodextrin umfasst.

4. Verfahren nach Anspruch 1, wobei das sekundäre Amin oder das tertiäre Amin an die Stelle der oxidativen Öffnung direkt kovalent gebunden ist, vorzugsweise wobei das aminfunktionalisierte Saccharidpolymer einen primären Alkohol und das sekundäre Amin oder das tertiäre Amin an der Stelle der oxidativen Öffnung trägt oder wobei das aminfunktionalisierte Saccharidpolymer eine Carbonsäure und das sekundäre Amin oder das tertiäre Amin an der Stelle der oxidativen Öffnung trägt oder wobei das aminfunktionalisierte Saccharidpolymer zwei sekundäre oder tertiäre Amine an der Stelle der oxidativen Öffnung trägt.

5. Verfahren nach Anspruch 1, wobei das aminfunktionalisierte Saccharidpolymer eine oder mehrere Stellen der oxidativen Öffnung umfasst, die nicht aminfunktionalisiert sind.

## Revendications

1. Procédé comprenant :
l'exposition d'un polymère saccharidique comprenant un ou plusieurs motifs monosaccharidiques liés par des liaisons glycosidiques et comprenant un diol trans-vicinal à un réactif d'oxydation comprenant de l'hypochlorite de sodium pentahydraté ;
la réaction du diol trans-vicinal avec le réactif d'oxydation pour former un site d'ouverture oxydative portant au moins un aldéhyde ;
l'exposition de l'au moins un aldéhyde à une amine pour former une imine intermédiaire au niveau du site d'ouverture oxydative ; et
la réduction de l'intermédiaire imine en une amine secondaire ou tertiaire au niveau du site d'ouverture oxydative pour former un polymère saccharidique fonctionnalisé par amine.

2. Procédé selon la revendication 1, dans lequel le polymère saccharidique comprend au moins un polysaccharide choisi dans le groupe constitué d'un dextrane, d'un lévane, d'un guar, et de toute combinaison de ceux-ci.

3. Procédé selon la revendication 1, dans lequel le polymère saccharidique comprend un oligosaccharide ayant de 3 à environ 20 motifs monosaccharidiques, de préférence dans lequel l'oligosaccharide comprend une maltodextrine.

4. Procédé selon la revendication 1, dans lequel l'amine secondaire ou l'amine tertiaire est directement liée de manière covalente au site d'ouverture oxydative, de préférence, dans lequel le polymère saccharidique fonctionnalisé par amine porte un alcool primaire et l'amine secondaire ou l'amine tertiaire au niveau du site d'ouverture oxydative ou dans lequel le polymère saccharidique fonctionnalisé par amine porte un acide carboxylique et l'amine secondaire ou l'amine tertiaire au niveau du site d'ouverture oxydative ou dans lequel le polymère saccharidique fonctionnalisé par amine porte deux amines secondaires ou tertiaires au niveau du site d'ouverture oxydative.

5. Procédé selon la revendication 1, dans lequel le polymère saccharidique fonctionnalisé par amine comprend un ou plusieurs sites d'ouverture oxydative qui ne sont pas fonctionnalisés par amine.
